# EUROPEAN PATENT APPLICATION

(11) **EP 1 369 829 A2**
(43) Date of publication of application: **10.12.2003**
(21) Application number: 03012737.7
(22) Date of filing: 04.06.2003
(51) Int. Cl.: G07F 7/10

(54) **Electronic value data communication method and system between IC cards**

(30) Priority: 05.06.2002 JP 2002164808
(71) Applicant: NTT DoCoMo, Inc., Tokyo 100-6150 (JP); Sakamura, Ken, Tokyo 141-0032 (JP); Koshizuka, Noboru, Musashino-shi, Tokyo 180-0013 (JP)
(72) Inventor: Ishii, Kazuhiko, Intellectual Property Department, cho 2-chome, Chiyoda-ku, Tokyo 100-6150 (JP); Mori, Kensaku, Intellectual Property Department, cho 2-chome, Chiyoda-ku, Tokyo 100-6150 (JP); Aono, Hiroshi, Intellectual Property Department, cho 2-chome, Chiyoda-ku, Tokyo 100-6150 (JP); Hongo, Sadayuki, Intellectual Property Department, cho 2-chome, Chiyoda-ku, Tokyo 100-6150 (JP); Sakamura, Ken, Intellectual Property Department, cho 2-chome, Chiyoda-ku, Tokyo 100-6150 (JP); Koshizuka, Noboru, Intellectual Property Dept., cho 2-chome, Chiyoda-ku, Tokyo 100-6150 (JP)
(74) Representative: Bockhorni, Josef

(57) **Abstract**

The object of the present invention is to prevent copying of electronic value data itself. In communication system of the present invention, different from the conventional system, source IC card A and target IC card B mutually authenticate the other party, and thereafter the electronic value data is transferred from IC card A to IC card B through direct encryption communication between these IC cards A, B, whereby it is feasible to prevent decipher and falsification of the data by a third party in the middle of a communication path and prevent copying of the data.

## Description

### BACKGROUND OF THE INVENTION

### Field of the Invention

The present invention relates to an electronic value data communication method, a communication system, an IC card, a portable terminal, and a communication terminal associated with transfer of electronic value data. The electronic value data herein represents, for example, electronic tickets, electronic money, electronic gift certificates, and so on. The communication terminals includes portable terminals (e.g., cellular phones, PHSs, PDAs, laptop personal computers, etc.), and information processing equipment (e.g., POS terminals, stationary personal computers, servers, host computers, etc.) with communication function.

### Related Background Art

In the conventional electronic value circulation of electronic value data with IC cards, a card-specific identification (ID) and a secret key are stored in each IC card, and the electronic value data in the IC card are protected by these means. A program utilizing the secret key is also stored in the IC card and even the holder of the IC card cannot read the secret key but can use only the program in the IC card. On the other hand, in order to provide the IC card with versatility, the program in the IC card has only the function of carrying out authentication and general encryption with the secret key, while reading and writing of electronic value data itself is carried out by a program on a computer to which an IC card reader/writer is connected. However, a third party could decipher and alter the program on the computer, and there was thus concern about injustices such as falsification of read electronic value data on the computer, copying thereof into another IC card, and so on.

Among these, the falsification could be prevented to some extent by the electronic signature technology, but it was very difficult to prevent the copying of electronic value data. For this reason, the following methods were adopted in order to detect whether an electronic value was an original or a copy.

For example, when first issuing electronic value data, a server of an issuer of the electronic value data authenticates an IC card of an issued party and identifies the IC card of the issued party to record the data therein. Transfer of the electronic value data is always done via the server, and the server updates and records which IC card holds each one of electronic value data. When the electronic value data is used, the server checks whether the use is made with a proper IC card (first method).

Alternatively, when first issuing electronic value data, the server of the issuer of the electronic value authenticates the IC card of the issued party and identifies the IC card of the issued party to record the data therein. For transfer of the electronic value data, the source IC card adds a signature certifying the transfer, to the electronic value data by use of a secret key. The signature is added every transfer of the data, and the number of signatures increases therewith. When the electronic value data is used, the server examines the signatures about transfers of the value in order, to check whether it can reach the IC card to which the value was first issued (second method).

In the first method, however, the both IC cards always had to be connected to the server on the occasion of transfer of electronic value data and the transfer was infeasible when one of the IC cards was not equipped with any interface to the server. Since the server must always manage holders of all electronic value data, extremely heavy loads were imposed on the server.

In the second method, the signature was added every transfer of the value, so that the volume of the electronic value data became high. Since each IC card has the limited capacity of storage, repetitive transfers will increase the data volume of signatures, so as to result in shortage of the memory capacity of the IC card and, in turn, result in incapability of further recording of electronic value data and further transfer of electronic value data.

Since the process of detecting whether an electronic value was an original or a copy involved the problems as described above, there were desires for prevention of the copying of electronic value data itself, in order to obviate the necessity for such a detection process.

The present invention has been accomplished in order to solve the above problems and an object of the present invention is to provide an electronic value data communication method, a communication system, an IC card, a portable terminal and a communication terminal capable of preventing the copying of electronic value data itself.

### SUMMARY OF THE INVENTION

The reason why the copying of electronic value data was unpreventable is that the electronic value data could be read in a decipherable state out of the IC card. On the other hand, the program stored in the IC card is protected from the outside so as not to permit any third party, of course, and even the holder of the IC card to read and falsify the program, as the data inside the IC card is. Therefore, the present invention employs a configuration wherein programs in IC cards protected from the outside directly authenticate each other and directly transfer electronic value data between them, thereby preventing the falsification and copying in the middle of a communication path.

Namely, in order to achieve the above object, an electronic value data communication method according to the present invention is an electronic value data communication method of effecting transfer of electronic value data from an IC card storing the electronic value data to another IC card, the method comprising: an authentication step wherein the source IC card and the target IC card mutually authenticate the other party; an encryption step wherein the source IC card encrypts the electronic value data; a transfer step wherein the source IC card transfers the encrypted electronic value data to the target IC card; and a decryption step wherein the target IC card decrypts the encrypted electronic value data.

A communication system according to the present invention is a communication system comprising a plurality of IC cards capable of storing electronic value data and communicating with each other, wherein, for transfer of the electronic value data between IC cards, a source IC card and a target IC card mutually authenticate the other party, the source IC card encrypts the electronic value data, the source IC card transfers the encrypted electronic value data to the target IC card, and the target IC card decrypts the encrypted electronic value data.

In the present invention as described above, first, the source IC card and the target IC card mutually authenticate the other party. This permits the source IC card and the target IC card both to ensure that the correspondent is an appropriate communication party, thereby assuring that the communication correspondent is not a forged IC card or an unregistered computer. Then the source IC card encrypts the electronic value data and transfers the encrypted electronic value data to the target IC card. Furthermore, the target IC card decrypts the encrypted electronic value data, whereby the target IC card can acquire the electronic value data decrypted.

Since the encrypted electronic value data is directly transferred between the source IC card and the target IC card as described above, it is feasible to prevent the decipher and falsification of the data by a third party in the middle of the communication path and prevent the copying of the data.

The present invention can also be taken from an aspect of the invention associated with the following IC card. Namely, the IC card according to the present invention comprises electronic value data storing means for storing electronic value data; program storing means for storing a communication program having an authentication step of performing mutual authentication with a target IC card which is the other party; and an encryption communication step of, when obtaining a result of authentication that the other party is a proper party, implementing encryption of electronic value data and transfer of the encrypted electronic value data with the other IC card; and program executing means for executing the communication program to transfer the electronic value data stored in the electronic value data storing means, to the other IC card.

In this IC card, the program executing means executes the communication program stored in the program storing means. In this configuration, the authentication step is carried out to perform the mutual authentication with the target IC card which is the other party and, when obtaining the result of the authentication certifying that the other party is a proper party, the encryption communication step is carried out to implement the encryption of electronic value data and transfer of the encrypted electronic value data with the other IC card. This configuration includes both the case where the IC card of the present invention encrypts the electronic value data and transfers the encrypted electronic value data to the other IC card and the case where the other IC card encrypts the electronic value data and transfers the encrypted electronic value data to the IC card of the present invention and where the IC card of the present invention receives the encrypted electronic value data.

Since the IC card of the present invention is configured to effect the direct transfer of the encrypted electronic value data to or from the other IC card as described above, it is feasible to prevent the decipher and falsification of the data by a third party in the middle of the communication path and prevent the copying of the data.

The above IC card of the present invention may also be configured so that the other party in communication includes at least one of a portable terminal and information processing equipment preliminarily registered as regular correspondents. Namely, the present invention can not be applied only to the transfer of electronic value data between IC cards, but can also be applied to transfer of electronic value data between an IC card and a portable terminal and transfer of electronic value data between an IC card and information processing equipment.

The present invention applied to the IC card as described above can also be applied to portable terminals, while achieving similar operation and effect. Namely, a portable terminal according to the present invention comprises electronic value data storing means for storing electronic value data; program storing means for storing a communication program having an authentication step of performing mutual authentication with a target portable terminal which is the other party; and an encryption communication step of, when obtaining a result of authentication that the other party is a proper party, implementing encryption of electronic value data and transfer of the encrypted electronic value data with the other portable terminal; and program executing means for executing the communication program to transfer the electronic value data stored in the electronic value data storing means, to the other portable terminal. The portable terminal may also be configured so that the other party in communication includes at least one of an IC card and information processing equipment preliminarily registered as regular correspondents.

The present invention applied to the IC card as described above can also be applied to communication terminals, while achieving similar operation and effect. Namely, a communication terminal according to the present invention comprises electronic value data storing means for storing electronic value data; program storing means for storing a communication program having an authentication step of performing mutual authentication with a target communication terminal which is the other party; and an encryption communication step of, when obtaining a result of authentication that the other party is a proper party, implementing encryption of electronic value data and transfer of the encrypted electronic value data with the other communication terminal; and program executing means for executing the communication program to transfer the electronic value data stored in the electronic value data storing means, to the other communication terminal. The communication terminal may also be configured so that the other party in communication includes at least one of an IC card, portable terminal and information processing equipment preliminarily registered as regular correspondents.

### BRIEF DESCRIPTION OF THE DRAWINGS

Fig. 1 is a configuration diagram of the IC card according to the embodiment of the invention.
Fig. 2A is a diagram showing the operation of the communication system according to the embodiment of the invention.
Fig. 2B a diagram showing the operation of the conventional communication system.
Fig. 3 is a flowchart showing the communication procedure in the communication system.
Fig. 4 is a diagram showing the exchange of data in the authentication step.
Fig. 5A is a diagram showing the overall configuration of the portable terminal to which the present invention is applied.
Fig. 5B a configuration diagram of the IC chip incorporated in the portable terminal.

### DESCRIPTION OF THE PREFERRED EMBODIMENTS

An embodiment of the present invention will be described below with reference to the drawings.

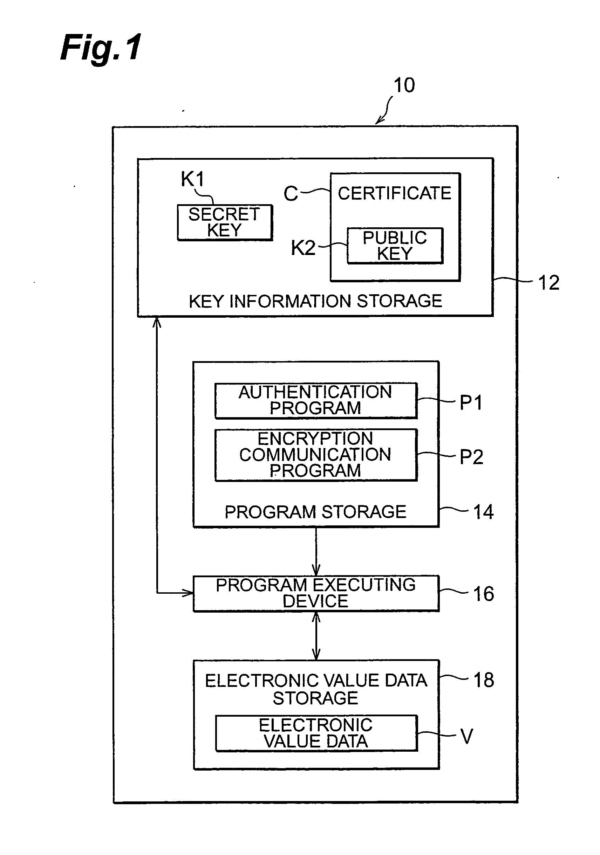

Fig. 1 shows a configuration of IC card 10 according to the present invention. As shown in this Fig. 1, the IC card 10 is comprised of a key information storage device 12 for storing a public key K2 to which a certificate C is attached and a secret key K1, to store key information from a correspondent; a program storage device 14 for storing communication programs; an electronic value data storage device 18 for storing electronic value data V; and a program executing device 16 for executing the above communication programs.

As the communication programs, the program storage device 14 stores an authentication program P1 of performing an authentication process of implementing mutual authentication with a target IC card which is the other party; and an encryption communication program P2 of, when obtaining a result of authentication certifying that the other party is an appropriate party, implementing encryption of electronic value data and transfer of the encrypted electronic value data with the other IC card.

When executing the encryption communication program P2, the program executing device 16 performs the transfer of the encrypted electronic value data to the other party and reception thereof from the other party, using a transmission-reception antenna (not shown) built in the IC card 10.

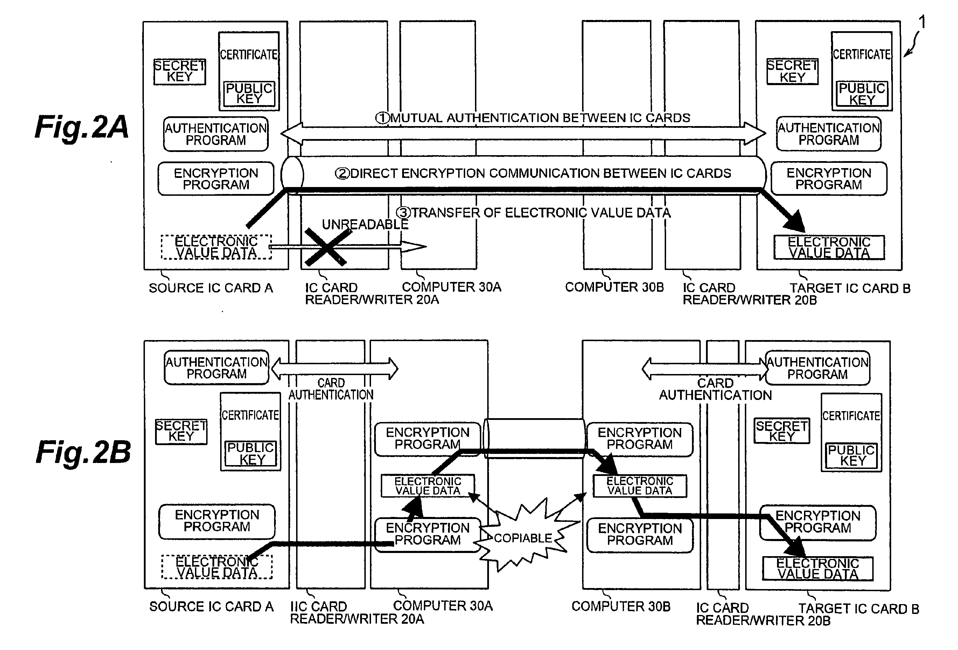

Fig. 2A shows a configuration of communication system 1 including a plurality of IC cards of a configuration similar to that of the IC card 10 in Fig. 1. As shown in this Fig. 2A, when electronic value data is transferred from IC card A to IC card B, it is relayed between the IC cards A, B by IC card reader/writer 20A for reading or writing data from or into the IC card A, computer 30A, computer 30B, and IC card reader/writer 20B for reading or writing data from or into IC card B. In this configuration, contactless communication or wired communication through a communication line may be established between IC card A and IC card reader/writer 20A and between IC card B and IC card reader/writer 20B. Furthermore, contactless communication or wired communication through a communication line may also be established between IC card reader/writer 20A and computer 30A and between IC card reader/writer 20B and computer 30B.

The details will be described later, but the communication system 1 of Fig. 2A is configured so that, for transfer of electronic value data from IC card A to IC card B, the source IC card A and the target IC card B mutually authenticate the other party and thereafter the electronic value data is transferred from IC card A to IC card B through direct encryption communication between these IC cards A, B.

Conventionally, as shown in Fig. 2B, the source IC card A performed authentication with the computer 30A, the electronic value data was transferred through encryption communication from IC card A to computer 30A, and the encrypted electronic value data was once decrypted by the computer 30A. Then authentication was performed between computers 30A, 30B, the electronic value data was thereafter transferred through encryption communication from computer 30A to computer 30B, and the computer 30B once decrypted the electronic value data. Furthermore, the computer 30B performed authentication with the target IC card B, the electronic value data was thereafter transferred through encryption communication from computer 30B to IC card B, and the IC card B finally decrypted the electronic value data, thereby implementing the transfer of electronic value data from IC card A to IC card B. There was the possibility that the electronic value data not encrypted, appearing when decrypted in each of the computers 30A, 30B, could be subjected to decipher, falsification, and copying by a third party.

In contrast, the communication system 1 of Fig. 2A is configured to implement the direct transfer of the encrypted electronic value data between the source IC card and the target IC card, whereby it is feasible to prevent the decipher and falsification of the data by a third party in the middle of the communication path and prevent the copying of the data.

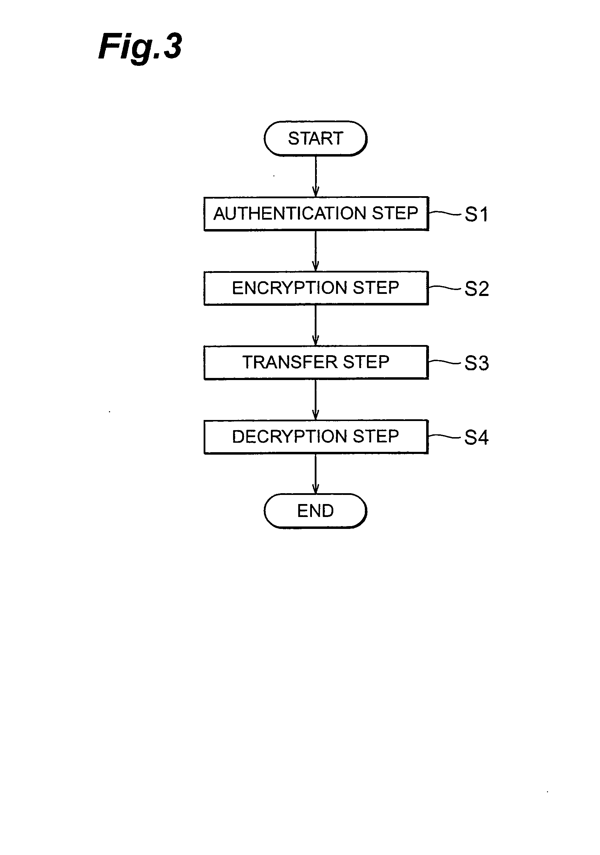

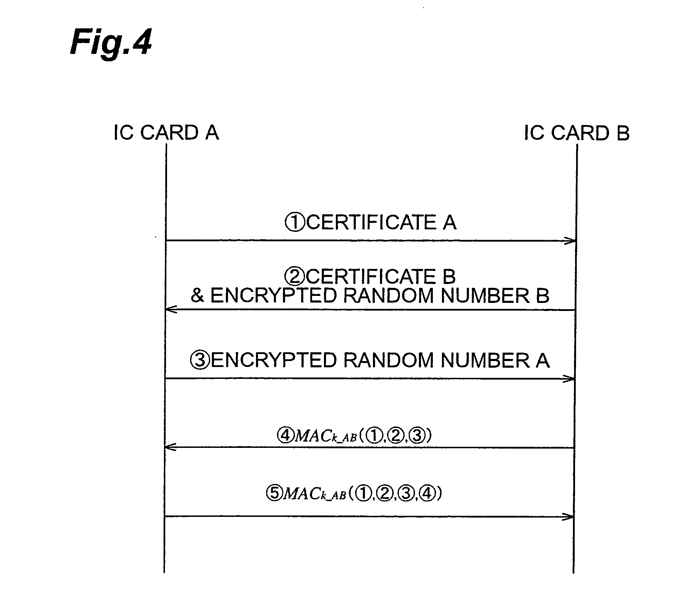

The operation in the present embodiment will be described with reference to Figs. 3 and 4.

In an authentication step of 51 in Fig. 3, the source IC card A and the target IC card B mutually authenticate the other party.

The processing procedure of the mutual authentication will be detailed. In the description of the present procedure, the IC card A will be denoted simply by "A" and the IC card B simply by "B."
(1) A first sends its own certificate A to B (message D shown in Fig. 4). It is assumed that the certificate A contains a public key A and a certifying authority certified that the public key A was a true public key of the IC card A.
(2) In response thereto, B examines the certificate A to confirm that the public key of A in the certificate A is a right key.
(3) Then B generates a random number B and encrypts it with the public key of A.
(4) Furthermore, B sends its own certificate B, and the random number B encrypted with the public key of A, to A (message D in Fig. 4). It is assumed that the certificate B contains a public key B and it was certified that the public key B was a true public key of the IC card B.
(5) A examines the certificate B to confirm that the public key of B in the certificate B is a right key.
(6) A decrypts the encrypted random number B, using its own secret key.
(7) Then A generates a random number A and encrypts it with the public key of B.
(8) Furthermore, A sends the random number A encrypted with the public key of B, to B (message D in Fig. 4).
(9) A generates a common key k_{_}AB from the random number A and the random number B by use of a common-key generating function. B also generates the common key k AB from the random number A and the random number B by use of the common-key generating function. The common keys of A and B should be equal to each other, because the same random numbers are put into the same generating function.
(10) B performs a calculation of a message authentication code generating function with the common key k_AB and the messages □, D, and □ to generate a message authentication code (MAC). MAC is a code (numerical value) authenticating that the messages were correctly transmitted and received.
(11) B sends the MAC generated in the preceding step of (10), to A (message □ in Fig. 4).
(12) A performs a calculation of the message authentication code generating function with the common key k_{_}AB and the messages □, □, and □. The result should be equal to the MAC having been sent in the preceding step of (11). When they are equal herein, five points below are confirmed.
   1) The fact that MACs are equal proves that the other party knows k_AB and the messages □, □, and D.
   2) The fact that the other party knows k_AB proves that the other party knows the random number A and the random number B.
   3) Since the random number A was encrypted with the public key B and then transmitted, only B knows this except for itself (A).
   4) It is, therefore, proved that the other party in communication is B.
   5) The correspondent proved to be B also knows the messages □, □, and □. Therefore, the messages exchanged heretofore are definitely those from B and the messages having been transmitted must also correctly be delivered to B.
(13) A confirms from the preceding step (12) that the correspondent is B and the messages heretofore were correctly transmitted and received to and from B.
(14) A performs a calculation of the message authentication code generating function with the common key k_AB and the messages □, □, □, and □ to generate a MAC. MAC is a code (numerical number) authenticating that the messages were correctly transmitted and received.
(15) A sends the MAC generated in the preceding step of (14) to B (message D in Fig. 4).
(16) B performs a calculation of the message authentication code generating function with the common key k_AB and the messages □, □, □, and D. The result should be the same as the MAC having received in the preceding step of (15). If they are equal, the same proving method as in the step (12) verifies that the correspondent is right A and the messages heretofore were correctly transmitted and received to and from A.

As described above, A and B are able to mutually authenticate the other party with certainty. MAC_{k_AB} shown in Fig. 4 represents the function that generates the message authentication code (MAC: Message Authentication Code) with the common key k_AB.

In the next encryption step of S2 in Fig. 3, the source IC card A then encrypts the electronic value data. The encryption method herein is not limited to any specific encryption technique but can be any method selected from a variety of encryption methods preliminarily defined with the target IC card B. The encryption program P2 in the IC card of Fig. 1 includes neither a copy command nor a data readout command, so as to prevent the program in the IC card from being falsified, whereby nobody can undertake copying of electronic value data and readout of electronic value data.

In the next transfer step of S3, the source IC card A transfers the encrypted electronic value data to the target IC card B. For this reason, the encrypted electronic value data is directly transferred between the source IC card A and the target IC card B, whereby it is feasible to prevent the decipher and falsification of the data by a third party in the middle of the communication path and prevent the copying of the data.

In the next decryption step of S4, the source IC card B decrypts the encrypted electronic value data. This permits the target IC card B to acquire the electronic value data decrypted.

Since the electronic value data is transferred through the encryption communication between the source IC card and the target IC card by the falsification-proof program in the IC card with neither the copy command nor the data readout command, as described above, it is feasible to prevent the decipher and falsification of the data by a third party in the middle of the communication path and prevent the copying of the data.

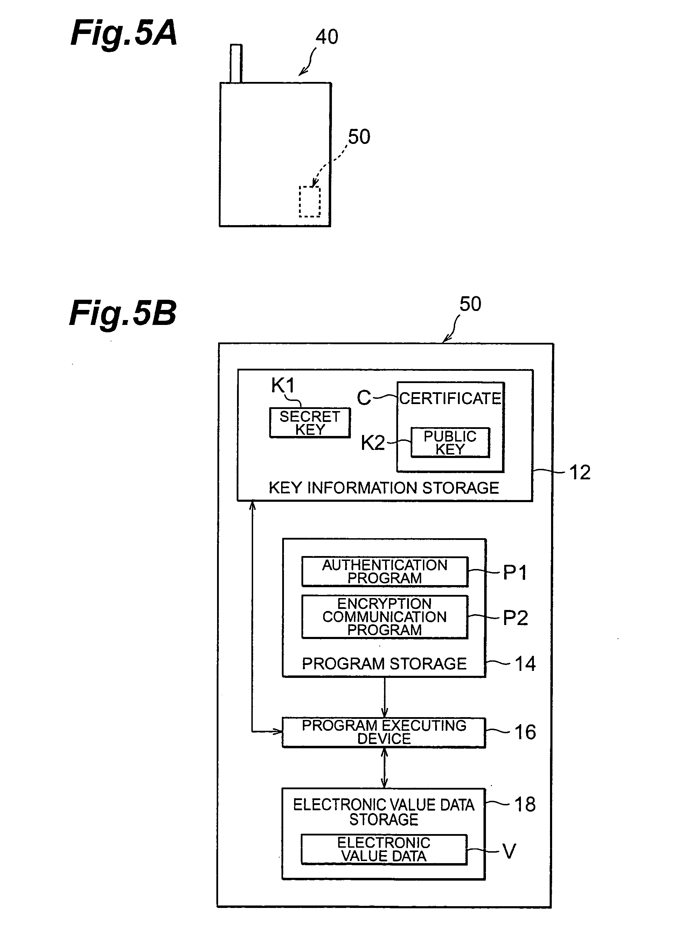

The present invention can also be applied to portable terminals (e.g., cellular phones, PHSs, PDAs, laptop personal computers, etc.), as well as the IC cards. In this application, the communication function with the other party can be implemented by use of the function of the portable terminal and the portable terminal can be made up, for example, in a configuration in which the portable terminal 40 incorporates an IC chip 50 that functions to perform the authentication, encryption, and storage of electronic value data and others, as shown in Fig. 5A.

In this configuration the IC chip 50 can be constructed in a configuration similar to that of the IC card 10 of Fig. 1, as shown in Fig. 5B. However, since the communication function is implemented by use of the function of the portable terminal, the IC chip 50 does not have to be equipped with the configuration associated with communication, including the antenna, and, therefore, the size of the IC chip 50 can be compact enough to be incorporated in the portable terminal 40. This IC chip 50 does not allow the falsification of data and programs from the outside, as the IC card 10 does not.

The electronic value data can be transferred between the portable terminals 40 incorporating such IC chip 50, through direct encryption communication similar to that between the IC cards described above, whereby it is feasible to prevent the decipher and falsification of the data by a third party in the middle of the communication path and prevent the copying of the data.

In the present invention, the configuration where the above-mentioned IC chip 50 is built in the information processing equipment (e.g., POS terminals, stationary personal computers, servers, host computers, etc.), can be adopted.

The present invention can not be applied only to the transfer of electronic value data between IC cards and the transfer of electronic value data between portable terminals, but can also be applied to transfer of electronic value data between IC cards, portable terminals, and information processing equipment preliminarily registered as regular communication terminals, while achieving similar operation and effect.

As described above, the present invention has achieved the effect of capability of preventing the decipher and falsification of data by a third party in the middle of the communication path and preventing the copying of data, because of the direct transfer of the encrypted electronic value data between the source IC card and the target IC card.

## Claims

1. An electronic value data communication method of effecting transfer of electronic value data from an IC card storing the electronic value data to another IC card, the method comprising:
an authentication step wherein the source IC card and the target IC card mutually authenticate the other party;
an encryption step wherein the source IC card encrypts the electronic value data;
a transfer step wherein the source IC card transfers the encrypted electronic value data to the target IC card; and
a decryption step wherein the target IC card decrypts the encrypted electronic value data.

2. A communication system comprising a plurality of IC cards capable of storing electronic value data and communicating with each other,
wherein, for transfer of the electronic value data between IC cards,
a source IC card and a target IC card mutually authenticate the other party,
the source IC card encrypts the electronic value data,
the source IC card transfers the encrypted electronic value data to the target IC card, and
the target IC card decrypts the encrypted electronic value data.

3. An IC card comprising:
electronic value data storing means for storing electronic value data;
program storing means for storing a communication program having an authentication step of performing mutual authentication with a target IC card which is the other party; and an encryption communication step of, when obtaining a result of authentication that the other party is a proper party, implementing encryption of electronic value data and transfer of the encrypted electronic value data with the other IC card; and
program executing means for executing the communication program to transfer the electronic value data stored in the electronic value data storing means, to the other IC card.

4. The IC card according to Claim 3, wherein the other party in communication includes at least one of a portable terminal and information processing equipment preliminarily registered as regular correspondents.

5. A portable terminal comprising:
electronic value data storing means for storing electronic value data;
program storing means for storing a communication program having an authentication step of performing mutual authentication with a target portable terminal which is the other party; and an encryption communication step of, when obtaining a result of authentication that the other party is a proper party, implementing encryption of electronic value data and transfer of the encrypted electronic value data with the other portable terminal; and
program executing means for executing the communication program to transfer the electronic value data stored in the electronic value data storing means, to the other portable terminal.

6. The portable terminal according to Claim 5, wherein the other party in communication includes at least one of an IC card and information processing equipment preliminarily registered as regular correspondents.

7. A communication terminal comprising:
electronic value data storing means for storing electronic value data;
program storing means for storing a communication program having an authentication step of performing mutual authentication with a target communication terminal which is the other party; and an encryption communication step of, when obtaining a result of authentication that the other party is a proper party, implementing encryption of electronic value data and transfer of the encrypted electronic value data with the other communication terminal; and
program executing means for executing the communication program to transfer the electronic value data stored in the electronic value data storing means, to the other communication terminal.

8. The communication terminal according to Claim 7, wherein the other party in communication includes at least one of an IC card, portable terminal and information processing equipment preliminarily registered as regular correspondents.
